(19)

**Europäisches Patentamt**

**European Patent Office**

**Office européen des brevets**

(11)　**EP 4 625 211 A1**

(12)　**EUROPEAN PATENT APPLICATION**

(43) Date of publication:
　　01.10.2025　Bulletin 2025/40

(21) Application number: 24167667.5

(22) Date of filing: 28.03.2024

(51) International Patent Classification (IPC):
　　**G06F 17/11** (2006.01)　　**H02J 3/00** (2006.01)

(52) Cooperative Patent Classification (CPC):
　　**G06F 17/11; G06Q 10/04; G06Q 50/06; H02J 3/00**

(84) Designated Contracting States:
　　**AL AT BE BG CH CY CZ DE DK EE ES FI FR GB
　　GR HR HU IE IS IT LI LT LU LV MC ME MK MT NL
　　NO PL PT RO RS SE SI SK SM TR**
　　Designated Extension States:
　　**BA**
　　Designated Validation States:
　　**GE KH MA MD TN**

(71) Applicant: **Hitachi Energy Ltd
　　8050 Zürich (CH)**

(72) Inventor: **FENG, Xiaoming
　　Cary, North Carolina 27519 (US)**

(74) Representative: **Vossius & Partner
　　Patentanwälte Rechtsanwälte mbB
　　Siebertstrasse 3
　　81675 München (DE)**

(54)　**SYSTEM CONTROL UTILIZING ALGORITHMIC FRAMEWORK TO SOLVE LINEAR AND NON-LINEAR OPTIMIZATION PROBLEMS**

(57)　Traditional algorithms for solving constrained optimization problems are complicated to implement, difficult to interpret, and require significant computational resources. Disclosed embodiments convert constrained optimization problems into parametric optimization problems, in which at least a subset of the constraints are converted into parametric quadratic penalty (PQP) terms that each depends on a translational parameter. The parametric optimization problem may be used for optimization in a power system (e.g., for optimal power flow, economic dispatch, etc.). When solving the parametric optimization problem, the translational parameters are updated to ensure convergence. The parametric optimization problem can be solved with reduced computational expense, using only a linear equation solver to solve a sequence of primal variables only, thereby reducing computational complexity and expense. In addition, the disclosed embodiments provide a means to incorporate constraints into machine-learning algorithms. The disclosed algorithmic framework also provides interpretability and insights for analysis.

**FIG. 4**

## Description

## BACKGROUND

Field of the Invention

The embodiments described herein are generally directed to controlling a system, such as a power system (e.g., power grid), and, more particularly, to system control utilizing an algorithmic framework to solve linear and non-linear optimization problems.

Description of the Related Art

There are a number of traditional algorithms for solving a constrained optimization problem. These traditional algorithms include simplex algorithms, dual-simplex algorithms, barrier algorithms, interior-point algorithms, ellipsoid algorithms, crisscross algorithms, and active-constraint-set algorithms.

However, these traditional algorithms are complicated to implement. In particular, these traditional algorithms generally require significant computational expense (e.g., in terms of computational resources and/or computational time), including non-linear equation solvers. In addition, the interpretability of these traditional algorithms tends to be low. Low interpretability renders it difficult for a human operator to understand and evaluate a result of the algorithm.

The present disclosure is directed toward overcoming one or more of these and other problems discovered by the inventor.

## SUMMARY

Systems, methods, and non-transitory computer-readable media are disclosed for system control utilizing an algorithmic framework to solve linear and nonlinear optimization problems.

In an embodiment, a method of optimizing operation of a power system comprises using at least one hardware processor to: acquire a constrained optimization problem for a power system, the constrained optimization problem comprising a first objective function that is subject to one or more constraints, wherein the first objective function includes a plurality of variables that collectively represent a configuration of the power system; convert the constrained optimization problem into a parametric optimization problem comprising a second objective function that includes the first objective function and, for each of at least a subset of the one or more constraints, a parametric quadratic penalty (PQP) term that depends on a translational parameter; perform a solution process that comprises, until a convergence condition is satisfied, in each of one or more iterations, solving the parametric optimization problem to produce a solution, and updating a value of the translational parameter on which the PQP term of at least one of the at least a subset of the one or more constraints depends; determining an optimized configuration of the power system from a final solution output by the solution process; and operating the power system according to the optimized configuration.

The method may further comprise using the at least one hardware processor to: determine whether or not the constrained optimization problem has two or more optimal solutions; and when determining that the constrained optimization problem has two or more optimal solutions, add at least one regularization constraint to the at least a subset of the one or more constraints.

The at least a subset of the one or more constraints may comprise all of the one or more constraints, such that the parametric optimization problem is unconstrained.

The one or more constraints may be a plurality of constraints that comprises one or more equality constraints and one or more inequality constraints, wherein the at least a subset of the one or more constraints consists of the one or more inequality constraints, and wherein the second objective function is subject to the one or more equality constraints.

The value of the translational parameter, upon which the PQP term of the at least one constraint depends, may be updated based on a type of the at least one constraint, wherein the type of the at least one constraint is one of a plurality of possible constraint types, wherein the plurality of possible constraint types includes equality, inequality, and regularization.

The value of the translational parameter, upon which the PQP term of the at least one constraint depends, may be updated based on a current value of the translational parameter and a distance of the produced solution to a constraint hypersurface.

The constrained optimization problem may be linear. For the constrained optimization problem defined as:

$$\min_{x} c^T x$$

subject to

$$A_{EQ}x = b_{EQ}$$

$$A_{IN}x \leq b_{IN}$$

wherein $c^T x$ is the first objective function, $x$ is the plurality of variables, $c$ includes a coefficient for each of the plurality of variables $x$, $A_{EQ}$ is a set of equality coefficients, $b_{EQ}$ is a set of equality values, $A_{IN}$ is a set of inequality coefficients, and $b_{IN}$ is a set of inequality values, the parametric optimization problem may be unconstrained and defined as:

$$\min_{x} \varphi_z(x)$$

in which

$$\varphi_z(x) = c^T x + \frac{1}{2} * (Hx - b + z)^T W (Hx - b + z)$$

$$H = \begin{bmatrix} A_{EQ} \\ A_{IN} \\ I \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$b = \begin{bmatrix} b_{EQ} \\ b_{IN} \\ 0 \end{bmatrix}$$

$$z = \begin{bmatrix} z_{EQ} \\ z_{IN} \\ z_0 \end{bmatrix}$$

wherein $\varphi_z(x)$ is the second objective function, $I$ is an identity matrix, $\rho_{EQ}$, $\rho_{IN}$, and $\rho_0$ are weights, $z_{EQ}$ includes the translational parameter for each equality constraint in the at least a subset of the one or more constraints, $z_{IN}$ includes the translational parameter for each inequality constraint in the at least a subset of the one or more constraints, and $z_0$ includes the translational parameter for each regularization constraint in the at least a subset of the one or more constraints.

The constrained optimization problem may be non-linear. For the constrained optimization problem defined as:

$$\min_{x} f(x)$$

subject to

$$g_{EQ}(x) = 0$$

$$g_{IN}(x) \leq 0$$

wherein $f(x)$ is the first objective function, $x$ is the plurality of variables, $g_{EQ}(x) = 0$ represents one or more equality constraints, and $g_{IN}(x) \leq 0$ represents one or more inequality constraints, the parametric optimization problem may be unconstrained and defined as:

$$\min_{x} \varphi_z(x)$$

$$\varphi_z(x) = f(x) + \frac{1}{2} * (g(x) + z)^T W (g(x) + z)$$

in which

$$g(x) = \begin{bmatrix} g_{EQ}(x) \\ g_{IN}(x) \\ x \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$z = \begin{bmatrix} z_{EQ} \\ z_{IN} \\ z_0 \end{bmatrix}$$

wherein $\varphi_z(x)$ is the second objective function, $\rho_{EQ}$, $\rho_{IN}$, and $\rho_0$ are weights, $z_{EQ}$ includes the translational parameter for each equality constraint in the at least a subset of the one or more constraints, $z_{IN}$ includes the translational parameter for each inequality constraint in the at least a subset of the one or more constraints, and $z_0$ includes the translational parameter for each regularization constraint in the at least a subset of the one or more constraints.

For the constrained optimization problem defined as:

$$\min_{x} f(x)$$

subject to

$$g_{EQ}(x) = 0$$

$$g_{IN}(x) \leq 0$$

wherein $f(x)$ is the first objective function, $x$ is the plurality of variables, $g_{EQ}(x) = 0$ represents one or more equality constraints, and $g_{IN}(x) \leq 0$ represents one or more inequality constraints, the parametric optimization problem may be defined as:

$$\min_{x} \varphi_z(x)$$

subject to

$$g_{EQ}(x) = 0$$

and in which

$$\varphi_z(x) = f(x) + \frac{1}{2} * (g(x) + z)^T W (g(x) + z)$$

$$g(x) = \begin{bmatrix} g_{IN}(x) \\ x \end{bmatrix}$$

$$W = \begin{bmatrix} \rho_{IN} & 0 \\ 0 & \rho_0 \end{bmatrix}, \rho_{IN} \gg \rho_0$$

$$z = \begin{bmatrix} z_{IN} \\ z_0 \end{bmatrix}$$

wherein $\varphi_z(x)$ is the second objective function, $\rho_{IN}$ and $\rho_0$ are weights, $z_{IN}$ includes the translational parameter for each inequality constraint in the at least a subset of the one or more constraints, and $z_0$ includes the translational parameter for each regularization constraint in the at least a subset of the one or more constraints.

The method may further comprise using the at least one hardware processor to, in at least one of the one or more iterations, determine whether or not the convergence condition is satisfied based on a change in the value of the translational parameter, upon which the PQP term of the at least one constraint depends. Determining whether or not the convergence condition is satisfied may comprise determining whether or not the change in the value is less than a predefined threshold value.

The at least a subset of the one or more constraints may consist of only those of the one or more constraints that are violated by an initial solution to the constrained optimization problem in which the first objective function was not subjected to the one or more constraints.

The method may further comprise using the at least one hardware processor to: determine whether or not the constrained optimization problem is strictly convex; and when determining that the constrained optimization problem is strictly convex, select the at least a subset of the one or more constraints, such that the at least a subset of the one or more constraints consists of only those of the one or more constraints that are violated by an initial solution to the constrained optimization problem in which the first objective function was not subjected to the one or more constraints.

The second objective function may include a slack variable for each inequality constraint in the at least a subset of the one or more constraints.

The final solution may represent one or more control settings for optimal power flow in the power system, wherein the optimized configuration defines an amount of power to be output by each of one or more power generation resources within the power system.

The final solution may represent economic dispatch in the power system, wherein the optimized configuration defines an amount of power to be output by each of one or more power generation resources within the power system.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

**BRIEF DESCRIPTION OF THE DRAWINGS**

The details of the present invention, both as to its structure and operation, may be gleaned in part by study of the accompanying drawings, in which like reference numerals refer to like parts, and in which:

FIG. 1 illustrates an example infrastructure, in which any of the processes described herein may be implemented, according to an embodiment;
FIG. 2 illustrates an example processing system, by which any of the processes or other functions described herein may be executed, according to an embodiment;
FIG. 3 illustrates an example data flow for managing a target system, according to an embodiment; and
FIG. 4 illustrates an example process for solving a constrained optimization problem, according to an embodiment.

**DETAILED DESCRIPTION**

In an embodiment, systems, methods, and non-transitory computer-readable media are disclosed for system control utilizing an algorithmic framework to solve linear and nonlinear optimization problems. Disclosed embodiments are analogous to determining the equilibrium point in a potential field, which is the supposition of a potential function and one or more parametric potential functions, such that the equilibrium point is the optimal solution of a constrained optimization. Accordingly, disclosed embodiments may also be referred to as a potential field shaping (PFS) approach. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

1. Infrastructure

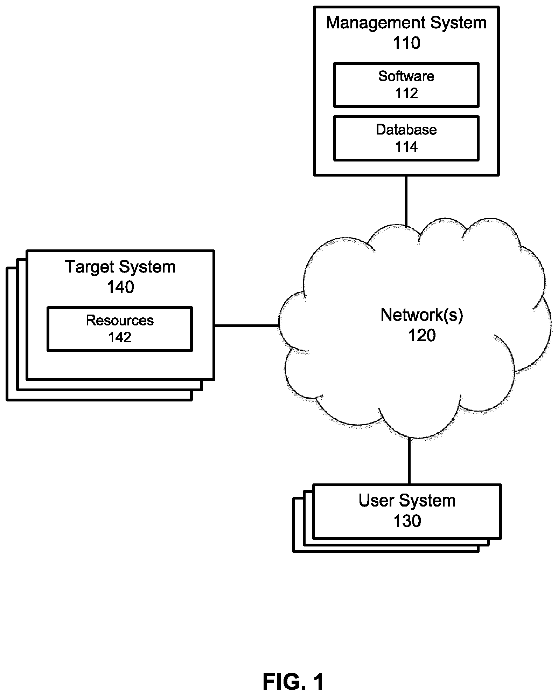

FIG. 1 illustrates an example infrastructure in which any of the disclosed processes may be implemented, according to an embodiment. The infrastructure may comprise a management system 110 (e.g., comprising one or more servers) which hosts and/or executes one or more of the processes (e.g., implemented as software 112) described herein. Examples of management system 110 include, without limitation, a supervisory control and data acquisition (SCADA) system, a power management system (PMS), an energy management system (EMS), a distribution management system (DMS), an advanced DMS (ADMS), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may host and/or execute software 112 and/or host a database 114. In addition, management system 110 may be communicatively connected, via one or more networks 120, to one or more user systems 130 and/or one or more target systems 140.

Network(s) 120 may comprise the Internet, and management system 110 may communicate with user system(s) 130 and/or target system(s) 140 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks 120. For example, management system 110 may be connected to a subset of user systems 130 and/or target systems 140 via the Internet, but may be connected to one or more other user systems 130 and/or target systems 140 via an intranet. Furthermore, while only a few user systems 130 and target systems 140, one instance of software 112, and one database 114 are illustrated, it should be understood that the infrastructure may comprise any number of user systems 130, target systems 140, instances of software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which an operator of target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and/or the like, including elements comprising or derived from data stored in database 114.

Target system 140 may be any system for which operation can be optimized via a constrained optimization problem. For the purposes of providing specific examples throughout the present disclosure, it will generally be assumed that target system 140 comprises a power system, such as a power distribution grid, power transmission grid, microgrid, and/or other type of power grid or power network. Target system 140 may comprise one or more, and generally a plurality of, resources 142. In the case of a power system, resources 142 will comprise power resources, such as power generators, energy storage systems, loads (e.g., rechargeable energy storage system or other controllable load, and/or non-controllable loads), and/or the like. These power resources may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. Each resource 142 may be subject to complex technical constraints and/or business constraints, such as, in the case of power resources, a minimum up-time, a maximum down-time, a ramp-up and/or ramp-down rate, a modulation or stability (e.g., a generation unit may not change its production level too many times or at too fast of a rate), a start-up and/or shut-down ramp rate (e.g., when starting or stopping, a generation unit must follow a specific power curve, which may depend on how long the generation unit has been offline or online), and/or the like.

Management system 110 may execute software 112, comprising one or more software modules that implement one or more of the disclosed processes or other functions. In addition, management system 110 may comprise, be communicatively coupled with, or otherwise have access to database 114 that stores the data input into and/or output from one or more of the disclosed processes. Any suitable database may be utilized in database 114, including without limitation MySQL™, Oracle™, IBM™, Microsoft SQL™, Access™, PostgreSQL™, and/or the like, and including cloud-based databases, proprietary databases, and unstructured databases.

2. Example Processing Device

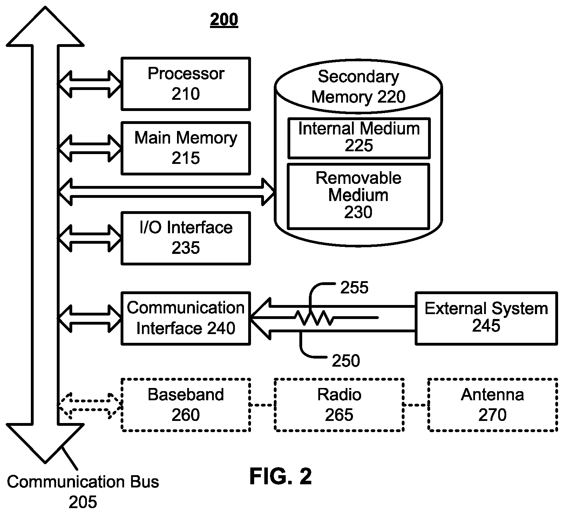

FIG. 2 illustrates an example wired or wireless processing system 200, by which any of the processes or other functions described herein may be executed, according to an embodiment. For example, system 200 may be used as or in conjunction with one or more of the processes (e.g., to store and/or execute software 112 implementing the process(es)) described herein, and may represent components of management system 110, user system(s) 130, target system(s) 140, and/or other processing devices described herein. System 200 can be a server or any conventional personal computer, or any other processor-enabled device that is capable of wired or wireless data communication. Other computer systems and/or architectures may also be used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, and/or the like.

Processor(s) 210 are preferably connected to a communication bus 205. Communication bus 205 may include a data channel for facilitating information transfer between storage and other peripheral components of system 200. Furthermore, communication bus 205 may provide a set of signals used for communication with processor(s) 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 may comprise a main memory 215. Main memory 215 provides storage of instructions and data for programs executing on processor(s) 210, such as software (e.g., software 112) implementing one or more of the disclosed processes. It should be understood that programs stored in the memory and executed by processor(s) 210 may be written and/or compiled according to any suitable language, including without limitation C/C++, Java, JavaScript, Perl, Python, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor(s) 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices (e.g. printers), networks, or other external systems 245. For example, data, which may include computer software or executable code, may be transferred to system 200 from external system 245 (e.g., a network server) and/or from system 200 to external system 245, via communication interface 240. Examples of communication interface 240 include a built-in network adapter, network interface card (NIC), Personal Computer Memory Card International Association

(PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as software 112) is stored in main memory 215 and/or secondary memory 220. Computer programs can also be received via communication interface 240 and stored in main memory 215 and/or secondary memory 220. Such computer programs, when executed, may enable system 200 to perform one or more of the disclosed processes.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245 (e.g., a network information server or other network device). These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

3. <u>Example Data Flow for Power System Management</u>

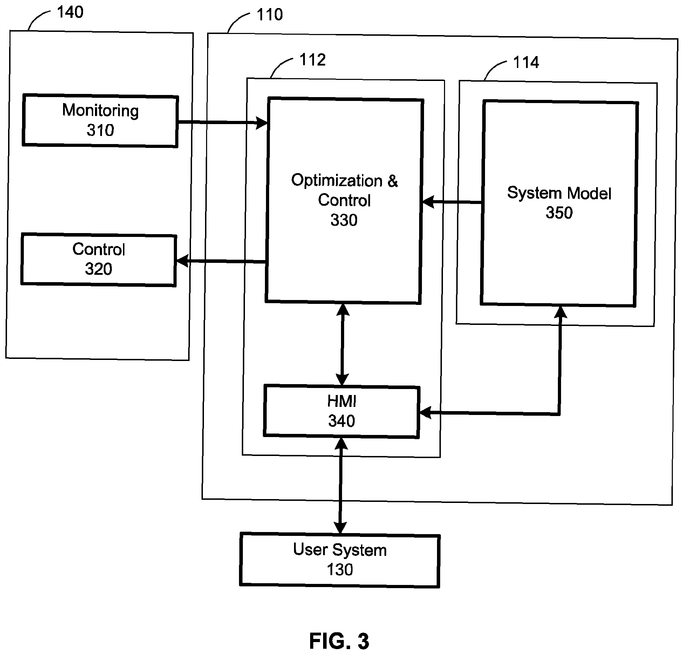

FIG. 3 illustrates an example data flow between a management system 110, a user system 130, and a target system 140 to be managed, according to an embodiment. Target system 140 may comprise a monitoring module 310 and a control module 320. Software 112 of management system 110 may comprise an optimization and control module 330, and a human-to-machine interface (HMI) 340. Database 114 of management system 110 may store a system model 350. It should be understood that communications between the various systems may be performed via network(s) 120. In addition, communications between a pair of modules may be performed via an application programming interface (API) provided by one of the modules and/or other interprocess communication means.

Monitoring module 310 may monitor and collect data that are output by one or more sensors in target system 140 (e.g., within a power network). Monitoring module 310 may also derive data from the collected data. Monitoring module 310 may transmit or "push" the collected and/or derived data as system telemetry to optimization and control module 330 (e.g., via an API of optimization and control module 330). Alternatively, optimization and control module 330 may retrieve or "pull" the system telemetry from monitoring module 310 (e.g., via an API of monitoring module 310). The system telemetry may include measurements at each of one or more nodes or other points within target system 140 (e.g., within the network of a power system). The system telemetry may be communicated from monitoring module 310 to optimization and control module 330 in real time, as data are collected and/or derived, or periodically. As used herein, the term "real time" includes events that occur simultaneously, as well as events that are separated in time by ordinary delays resulting from latencies in processing, memory access, communications, and/or the like.

Optimization and control module 330 receives the system telemetry from monitoring module 310, and uses the system telemetry in conjunction with system model 350 to determine an optimal configuration for one or more resources 142 of target system 140, and then control target system 140 to transition to the optimal configuration. In particular, optimization and control module 330 may generate control signals that are transmitted to control module 320 of target system 140. For example, the control signals may be sent via an API of control module 320. The control signals may be communicated from optimization and control module 330 of management system 110 to control module 320 of target system 140 in real time, as the system telemetry is received and analyzed, periodically (e.g., in advance of a sliding optimization window), or in response to a user operation. Optimization and control module 330 may control target system 140 automatically (e.g., without any user intervention), semi-automatically (e.g., requiring user approval or confirmation), and/or in response to manual user inputs.

The optimal configuration may comprise a resource allocation schedule. In this case, optimization and control module 330 may control one or more components, including resources 142, in target system 140 according to the resource allocation schedule. For instance, the resource allocation schedule may specify which resources 142 in target system 140 to utilize during specific time periods, how much of each resource 142 in target system 140 to utilize during specific time periods, and/or the like. In the context of a power system, resources 142 may comprise one or more power generators, the resource allocation schedule may comprise an amount of power to be output by each of the power generator(s) for at least one time period, and the power generator(s) may be controlled to output the associated amount of power for each power generator during the associated time period(s).

Optimization and control module 330 may perform one or more types of analysis, such as optimal power flow analysis, economic dispatch, state estimation, distributed energy resource (DER) management, contingency analysis, Volt-Var optimization, and/or the like. The analysis may be performed in response to a user operation, or automatically in real time or periodically. In some cases, the analysis may be provided to a user via human-to-machine interface 340. In other cases, optimization and control module 330 may, automatically (i.e., without user intervention) or semi-automatically (e.g., with user approval, confirmation, or modification), initiate a control operation based on the analysis. Initiation of the control operation may comprise transmitting control commands to control module 320 of target system 140, which may responsively control target system 140 according to the control commands.

Control module 320 of target system 140 receives the control signals from optimization and control module 330, and controls one or more components (e.g., resources 142) of target system 140 in accordance with the control signals. Examples of such control within the context of a power system include, without limitation, setting a setpoint (e.g., for real and/or reactive power for distributed energy resources), adjusting the power output of a power generator, adjusting the charging or discharging of an energy storage system (e.g., battery energy storage system), adjusting the power input to a load, closing or opening a switch (e.g., circuit breaker), and/or the like.

Human-to-machine interface 340 may generate a graphical user interface that is transmitted to user system 130 and receive inputs to the graphical user interface via user system 130. The graphical user interface may provide information regarding the state of target system 140 determined from the system telemetry, an optimized configuration of target system 140 (e.g., resource allocation schedule) determined by optimization and control module 330, a control decision or recommendation determined by optimization and control module 330, a visual representation of system model 350, and/or the like. In addition, the graphical user interface may provide inputs that enable a user of user system 130 to configure settings of optimization and control module 330, configure system model 350, specify or approve controls to be transmitted to control module 320 of target system 140, analyze target system 140, and/or the like.

System model 350 may be stored in database 114 and accessed by modules, such as optimization and control module 330, via any known means (e.g., via an API of database 114, a direct query of database 114, etc.). Database 114 may store a system model 350 for each target system 140 that is managed by management system 110. Each system model 350 may model the respective target system 140 in any suitable manner. For example in the context of a power system, system model 350 may comprise a single-line diagram representing the components of the network of the power system and their relationships to each other. It should be understood that the single-line diagram or other system model 350 may be implemented as a data structure that is capable of being automatically analyzed by software modules, including optimization and control module 330.

4. Example Process for Optimizing Operation of Target System

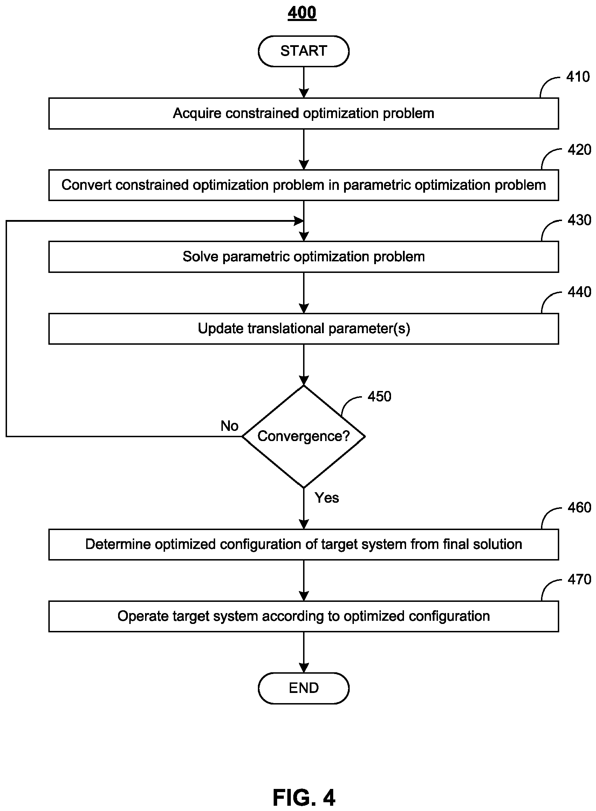

FIG. 4 illustrates an example process 400 for solving a constrained optimization problem, according to an embodiment. In an embodiment, the solution to the constrained optimization problem is used to optimize the operation of target system 140. Process 400 may be embodied in one or more software modules that are executed by one or more hardware processors (e.g., processor(s) 210). For example, process 400 may be implemented by software 112, and particularly, within optimization and control module 330, which is executed by processor(s) 210 of management system 110. Process 400 may be implemented as instructions represented in source code, object code, and/or machine code. These instructions may be executed directly by hardware processor(s) 210, or alternatively, may be executed by a virtual machine operating between the object code and hardware processor(s) 210.

Alternatively, process 400 may be implemented as a hardware component (e.g., general-purpose processor, integrated circuit (IC), application-specific integrated circuit (ASIC), digital signal processor (DSP), field-programmable gate array (FPGA) or other programmable logic device, discrete gate or transistor logic, etc.), combination of hardware components, or combination of hardware and software components. To clearly illustrate the interchangeability of hardware and software, various illustrative components are described herein generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a subprocess is for ease of description. Specific functions can be moved from one subprocess to another without departing from the invention.

Furthermore, while process 400 is illustrated with a certain arrangement and ordering of subprocesses, process 400 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Initially, in subprocess 410, a constrained optimization problem for target system 140 (e.g., power system) is acquired. Acquiring the constrained optimization problem may comprise receiving the constrained optimization problem (e.g., from an external system, via human-to-machine interface 340, etc.), retrieving the constrained optimization problem (e.g., from database 114), generating the constrained optimization problem, or the like. The constrained optimization problem may be linear or non-linear.

The constrained optimization problem may comprise a first objective function that is subject to one or more constraints. As used herein, the term "constraint" should be understood to include any type of mathematical constraint, including a constraint that is represented as a bound on a variable (e.g., an equality or inequality constraint). The first objective function may include a plurality of variables that collectively represent a configuration or state of target system 140. For example, each of the plurality of variables may represent a parameter or other attribute of a resource 142 of target system 140. In the case of a power system, the plurality of variables may represent an amount of power to be generated, an amount of power to be consumed (e.g., load), a number of generating units, positions of switches, setpoint values, statuses or settings of resources 142, and/or the like.

An output of the first objective function may be a single scalar value that is to be minimized or maximized. For the sake of simplicity, it will be assumed that the constrained optimization problem is a minimization problem, such that the output of the first objective function is to be minimized. However, a person of ordinary skill in the art would understand how to easily convert any constrained optimization problem between a minimization problem and a maximization problem.

In subprocess 420, the constrained optimization problem is converted into a parametric optimization problem. The parametric optimization problem may comprise a second objective function that includes the first objective function from the constrained optimization problem. In addition, the second objective function may comprise, for each of at least a subset of the constraint(s) to which the constrained optimization problem is subject, a parametric quadratic penalty (PQP) term that depends on a translational parameter. In other words, subprocess 420 may convert at least a subset of the constraint(s) of the constrained optimization problem into PQP term(s). As with the first objective function, an output of the second objective function may be a single scalar value that is to be minimized or maximized (i.e., whichever applies to the first objective function). The translational parameters of all of the PQP terms may be initialized in subprocess 420 to an initial value (e.g., zero). In an embodiment, the resulting parametric optimization problem is a primal problem, involving only primal variables. Embodiments of subprocess 420 will be described in greater detail elsewhere herein.

In an embodiment, all of the constraint(s), to which the constrained optimization problem is subject, may be converted into PQP terms, such that the parametric optimization problem is unconstrained (i.e., not subject to any constraints). In other words, in this embodiment, the at least a subset of constraint(s) that is converted to PQP term(s) will comprise all of the constraint(s) to which the constrained optimization problem is subject.

In an alternative embodiment, only inequality constraints are converted into PQP terms. In this case, if the constrained optimization problem is subject to one or more equality constraints, the second objective function will remain subject to those equality constraint(s), but will not be subject to any inequality constraints. In other words, the at least a subset of constraint(s) that is converted to PQP term(s) will consist of only the inequality constraint(s), if any, to which the constrained optimization problem is subject. It should be understood that, in this embodiment, if the constrained optimization problem was subject to any equality constraints, the parametric optimization problem will remain partially constrained by these equality constraint(s).

In an additional or alternative embodiment, only constraint(s) that are violated by an initial solution to the constrained optimization problem, in which the first objective function is not subjected to the constraint(s), are converted into PQP terms. In other words, the at least a subset of constraint(s) that is converted to PQP term(s) will consist of only those constraint(s), if any, that are violated by the initial solution to the constrained optimization problem. In this embodiment, subprocess 420 may comprise solving the optimization problem, acquired in subprocess 410, at least once, to produce the initial solution, but without subjecting the optimization problem to any constraints (i.e., solving the optimization problem while ignoring the constraints). Then, the constraint(s) may be evaluated with respect to the initial solution to determine which constraint(s) are violated, if any, and only the violated constraint(s) are converted into PQP terms. The unviolated constraints may be ignored, or the second objective function in the parametric optimization problem may remain subject to the unviolated constraints. It should be understood that both the violated constraints and unviolated constraints may include one or more equality constraints and/or one or more inequality constraints. In an embodiment, this approach may be applied only when the constrained optimization problem is strictly convex. In this case, subprocess 420 may comprise determining whether or not the constrained optimization problem, acquired in subprocess 410, is strictly convex, using any standard means, and, when determining that the constrained optimization problem is strictly convex, selecting the subset of constraints to be converted into PQP terms so as to consist only of the constraint(s) that are violated by the initial solution. As is well-known in the art, a strictly convex function is one in which a straight line between any pair of points on the curve is above the curve, except for the intersection points between the straight line and the curve. The approach, of only incorporating PQP terms into the parametric optimization problem for the violated constraints, will generally simplify the parametric optimization problem, so as to reduce the computational expense of solving the parametric optimization problem.

In an additional or alternative embodiment, one or more regularization constraints may be added to the at least a subset of the constraint(s) that are converted into respective PQP term(s). In an embodiment, this approach may be applied only when the constrained optimization problem has two or more, and potentially an infinite number of, optimal solutions. In this case, subprocess 420 may comprise determining whether or not the constrained optimization problem has two or more optimal solutions, and, when determining that the constrained optimization problem has two or more optimal solutions, adding at least one regularization constraint to the at least a subset of the one or more constraints that are converted into respective PQP term(s). It should be understood that the constrained optimization problem has two or more optimal solutions when two or more solutions maximize (or minimize) the first objective function. Any suitable technique may be used to determine whether or not the constrained optimization problem has two or more optimal solutions.

In an additional or alternative embodiment, the second objective function of the parametric optimization problem may include a slack variable for each inequality constraint in the at least a subset of the constraint(s). The slack variable is constrained to be non-negative (i.e., zero or positive), and effectively converts the respective inequality constraint into an equality constraint. This enables the parametric optimization problem to be solved without inequality constraints. For example, the slack variable $s \geq 0$ can be introduced to convert the inequality constraint $Ax \leq b$ into the equality constraint $Ax + s = b$. In an embodiment, a squared slack variable is used (e.g., $s = u^2$) to ensure that the slack variable is always greater than or equal to zero.

After subprocess 420, a solution process is performed until a convergence condition is satisfied. In particular, subprocesses 430 and 440, representing the solution process, are performed for each of one or more, and generally a plurality of, iterations, until the convergence condition is satisfied. It should be understood that the number of iterations that are performed may depend on the initial solution that is used for the solution process, the particular convergence condition that is used, the complexity of the problem being solved (e.g., the complexity of target system 140), and/or other factors. The number of iterations may be anywhere from several, to tens, to hundreds, to thousands, to millions, to billions or more iterations.

In subprocess 430, the parametric optimization problem is solved to produce a solution. Subprocess 430 may comprise any solution-finding algorithm (e.g., root-finding algorithm) that is designed to find a minimum (or maximum) of the second objective function in the parametric optimization problem. For example, any suitable commercial off-the-shelf solver may be used. Advantageously, a computationally expensive solver, which would have been required for the constrained optimization problem, is not required for the parametric optimization problem. In particular, computationally expensive algorithms (.e., requiring significant computational resources and/or computational time), such as simplex, dual-simplex, barrier, interior-point, ellipsoid, crisscross algorithms, and active-constraint-set algorithms, are not required. Rather, the parametric optimization problem may be solved using a standard linear equation solver, which is much less computationally expensive (i.e., requiring fewer computational resources and/or reduced computational time).

In subprocess 440, a value of the translational parameter, on which the PQP term of at least one of the at least a subset of the one or more constraints depends, is updated. It should be understood that, in any particular iteration of subprocess 440, any number of the translational parameters may be updated, depending on the solution produced by subprocess 430. Thus, subprocess 440 may update the translational parameter for one, two or more, and potentially all of the PQP terms in the second objective function.

In an embodiment, the value of the translational parameter, upon which the PQP term of a constraint depends, may be updated based on the type of the constraint. The type of constraint may be one of a plurality of possible constraint types. This plurality of possible constraint types may comprise or consist of equality, inequality, and regularization. In other words, the constraint(s) that are converted into PQP term(s) may comprise one or more equality constraints, one or more inequality constraints, and/or one or more regularization constraints. In an additional or alternative embodiment, the value of the translational parameter, upon which the PQP term of a constraint depends, may be updated based on the current value of the translational parameter and a distance of the solution, produced by the most recent iteration of subprocess 430, to a constraint hypersurface (hyperplane for linear constraints). It should be understood that the constraint hypersurface represents a boundary in a hyperspace having any plurality of dimensions, including several, tens, hundreds, or thousands or more dimensions. The translational parameters act as anchor points, with one translational parameter or anchor point for each converted constraint. Updating the translational parameters acts to "pull" or bias the solution (e.g., like a spring) towards a feasible region of the hyperspace (i.e., within the constraint hypersurface). Embodiments of subprocess 440 will be described in greater detail elsewhere herein.

In subprocess 450, it is determined whether or not the convergence condition has been satisfied. Any suitable convergence condition may be used. The convergence condition may represent an equivalent reformulation of the Karush-Kuhn-Tucker (KKT) conditions. In an embodiment, the convergence condition depends on the change in value of the translational parameter(s) in the most recent iteration of subprocess 440. For example, in at least one, including potentially each, of the one or more iterations of the solution process, subprocess 450 may determine whether or not the convergence condition is satisfied based on the change(s) in value(s) of the translational parameter(s). This determination may comprise determining whether or not the change(s) in value(s) of the translational parameter(s) are less than a predefined threshold value. The predefined threshold value may represent a tolerance. In other words, subprocess 450 determines that, when the magnitude of the updates to the translational parameter(s) is within the tolerance, the solution process has converged to a final solution, and, conversely, when the magnitude of the updates to the translational parameter(s) is outside the tolerance, the solution process has not converged to a final solution. When determining that the convergence condition has not been satisfied (i.e., "No" in subprocess 450), process 400 may return to subprocess 430 to perform an additional iteration of the solution process. Otherwise, when determining that the convergence condition has been satisfied (i.e., "Yes" in subprocess 450), the solution process may end, and process 400 may proceed to subprocess 460.

In subprocess 460, an optimized configuration of target system 140 is determined from a final solution that was output by the solution process. In particular, the solution that was produced by the most recent (i.e., final) iteration of subprocess 430 may be used as the final solution. It should be understood that this final solution represents the solution at which the convergence condition was satisfied. The final solution will comprise optimal values for the plurality of variables in the first objective function, which has been incorporated into the second objective function of the parametric optimization problem. It should be understood that these optimal values are the values that optimize (e.g., minimize or maximize, depending on how the problem is defined) the second objective function (e.g., within a given tolerance).

The optimized configuration is derived from the optimal values of the plurality of variables in the final solution. In an embodiment in which the plurality of variables represent settings of resources 142 or other components of a power system, such as amounts of power to be generated, amounts of power to be consumed, values of setpoints, positions of switches, and/or the like, the optimized configuration may comprise the optimal values of the plurality of variables. In an alternative embodiment, the optimized configuration may be calculated or otherwise programmatically determined from the optimal values of the plurality of variables in the final solution.

In subprocess 470, target system 140 may be operated according to the optimized configuration that was determined in subprocess 460. This operation may comprise optimization and control module 330 transmitting control commands to control module 320 of target system 140, which may responsively control one or more resources 142 in target system 140 according to the control commands. In the context of a power system, these control commands may instruct control module 320 to set an amount of power to be generated by one or more power generators, an amount of power to be consumed by one or more loads, a setpoint of one or more resources 142, the position of one or more switches, and/or the like. As one specific example, the final solution may represent one or more control settings for optimal power flow in a power system, and the optimized configuration may define the amount of power to be output by each of one or more power generation resources within the power system. As another specific example, the final solution may represent economic dispatch in a power system, and the optimized configuration may define the amount of power to be output by each of one or more power generation resources within the power system.

Whereas subprocesses 410-460 are generally contemplated to be performed automatically, subprocess 470 may be performed manually, semi-automatically, or automatically. In a manual embodiment of subprocess 470, the optimized configuration may be output to an operator via human-to-machine interface 340 (e.g., displayed within a graphical user interface) as a recommendation or suggestion, and the operator may interact with optimization and control module 330 or another module via human-to-machine interface 340 (e.g., via one or more inputs within the graphical user interface) to either implement the optimized configuration or another configuration. In a semi-automatic embodiment of subprocess 470, the optimized configuration may be output to an operator via human-to-machine interface 340 (e.g., displayed within a graphical user interface), and the operator may approve the optimized configuration as-is, modify and approve the optimized configuration, or reject the optimized configuration, via human-to-machine interface 340 (e.g., via one or more inputs within the graphical user interface). When approving the optimized configuration, optimization and control module 330 may communicate with control module 320 of target system 140 to reconfigure target system 140 according to the optimized configuration. In an automatic embodiment of subprocess 470, optimization and control module 330, upon determining the optimized configuration, may automatically (i.e., without any human intervention via human-to-machine interface 340 or otherwise) communicate with control module 320 of target system 140 to reconfigure target system 140 according to the optimized configuration.

Process 400 may be executed iteratively, for each of one or more target systems 140, to continually determine and implement an optimized configuration of target system 140 for a sliding future time window, based on the most recent data (e.g., historical and/or current system telemetry, forecasted data for the current future time window, etc.) that are available for target system 140. The length of the future time window and/or the step size by which the future time window slides may be dictated by one or more design factors. For example, the length of the future time window may be one minute, five minutes, ten minutes, fifteen minutes, thirty minutes, one hour, two or more hours, twelve hours, twenty-four hours, two or more days, one week, one month, or the like. The step size may be seconds, one minute, five minutes, ten minutes, fifteen minutes, thirty minutes, one hour, two or more hours, twelve hours, twenty-four hours, or the like. It should be understood that if the step size is less than the length of the future time window, the future time windows for which process 400 is performed will overlap. On the other hand, if the length of the future time window and the step size are the same, process 400 will be performed for discrete, contiguous, non-overlapping time windows. In an additional or alternative embodiment, process 400 may be performed in response to a trigger, such as a user operation (e.g., via human-to-machine interface 340), an event detected within target system 140 or management system 110, and/or the like.

5. Conversion to Parametric Optimization Problem for Linear Problem

Embodiments of subprocess 420 for a linear constrained optimization problem will now be described in detail. A linear constrained optimization problem may be defined as:

$$\min_{x} c^T x$$

subject to

$$A_{EQ} x = b_{EQ}$$

$$A_{IN} x \leq b_{IN}$$

wherein $c^T x$ is the first objective function, $x$ is the plurality of variables (e.g., discrete or continuous variables, represented, for example, as a matrix), c includes a coefficient for each of the plurality of variables $x$ (e.g., a matrix representing a cost of energy in an embodiment in which $x$ represents an amount of energy), $A_{EQ}$ is a set (e.g., matrix) of equality coefficients, $b_{EQ}$ is a set (e.g., matrix) of equality values, $A_{IN}$ is a set (e.g., matrix) of inequality coefficients, and $b_{IN}$ is a set (e.g., matrix) of inequality values. It should be understood that, in the described equations, the transpose of a matrix is denoted by $T$ in the superscript of the matrix. Notably, any bounds on the plurality of variables $x$ are included in the constraints. While the inequality constraints are expressed herein in the form of "less than or equal to," the inequality constraints could alternatively be expressed in the form of "less than," "greater than," or "greater than or equal to," as will be understood by a person of ordinary skill in the art.

It should be understood that any constrained optimization problem may be defined in the format above. To provide a simple example, if a constrained optimization problem is initially defined as:

$$\max(c_1 \cdot x_1 + c_2 \cdot x_2)$$

subject to

$$x_1 + x_2 \le b_1$$

$$a_1 \cdot x_1 + a_2 \cdot x_2 \le b_2$$

$$a_3 \cdot x_1 + a_4 \cdot x_2 \le b_3$$

$$x_1 \ge 0$$

$$x_2 \ge 0$$

the constrained optimization problem may be defined using the notation above as follows:

$$x = \begin{bmatrix} x_1 \\ x_2 \end{bmatrix}$$

$$c = \begin{bmatrix} -c_1 \\ -c_2 \end{bmatrix}, \quad c^T = \begin{bmatrix} -c_1 & -c_2 \end{bmatrix}$$

$$A_{IN} = \begin{bmatrix} 1 & 1 \\ a_1 & a_2 \\ a_3 & a_4 \\ -1 & 0 \\ 0 & -1 \end{bmatrix}$$

$$b_{IN} = \begin{bmatrix} b_1 \\ b_2 \\ b_3 \\ 0 \\ 0 \end{bmatrix}$$

Notably, in the above example, there are no equality constraints.

While it will be assumed that the constrained optimization problem is subject to both equality and inequality constraints, it should be understood that a given constrained optimization problem may be subject to both one or more equality constraints and one or more inequality constraints, one or more equality constraints and no inequality constraints, no equality constraints and one or more inequality constraints, or no equality constraints and no inequality constraints. Disclosed embodiments can work with any of these scenarios, but the benefits of the disclosed embodiments are strongest when the constrained optimization problem is subject to at least one constraint, whether an equality or inequality constraint.

In subprocess 420, this constrained optimization problem may be converted into a parametric optimization problem. In an embodiment in which all of the constraints, including both equality and inequality constraints, are converted into PQP terms, this unconstrained parametric optimization problem may be defined as:

$$\min_{x} \varphi_z(x)$$

in which

$$\varphi_z(x) = c^T x + \frac{1}{2} * (Hx - b + z)^T W (Hx - b + z)$$

$$H = \begin{bmatrix} A_{EQ} \\ A_{IN} \\ I \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$b = \begin{bmatrix} b_{EQ} \\ b_{IN} \\ 0 \end{bmatrix}$$

$$z = \begin{bmatrix} z_{EQ} \\ z_{IN} \\ z_0 \end{bmatrix}$$

wherein $\varphi_z(x)$ is the second objective function, $I$ is the identity matrix, $\rho_{EQ}$, $\rho_{IN}$, and $\rho_0$ are weights (e.g., which may be determined experimentally), $z_{EQ}$ includes the translational parameter for each equality constraint that was converted into a PQP term, $z_{IN}$ includes the translational parameter for each inequality constraint that was converted into a PQP term, and $z_0$ includes the translational parameter for each regularization constraint. Notably, the parametric optimization problem comprises a system of equations that is overdetermined. The translational parameters $z$ may be represented as a parameter vector. As is well-understood in the art, the identity matrix is a square matrix in which all values on the principal diagonal are one and all other values are zero. The identity matrix $I$ is used in the parametric optimization problem as a regularization term, to force the solution to the parametric optimization problem to be unique (e.g., in the event that the constrained optimization problem may have multiple solutions). It should be understood that $\frac{1}{2} * (Hx - b + z)^T W (Hx - b + z)$ represents all of the PQP terms, collectively, in matrix format.

In an alternative embodiment in which only the inequality constraints are converted into PQP terms, this partially constrained parametric optimization problem (or unconstrained parametric optimization problem when there are no equality constraints) may be defined as:

$$\min_x \varphi_z(x)$$

subject to

$$A_{EQ} x = b_{EQ}$$

and in which

$$\varphi_z(x) = c^T x + \frac{1}{2} * (Hx - b + z)^T W (Hx - b + z)$$

$$H = \begin{bmatrix} A_{IN} \\ I \end{bmatrix}$$

$$W = \begin{bmatrix} \rho_{IN} & 0 \\ 0 & \rho_0 \end{bmatrix}, \rho_{IN} \gg \rho_0$$

$$b = \begin{bmatrix} b_{IN} \\ 0 \end{bmatrix}$$

$$z = \begin{bmatrix} z_{IN} \\ z_0 \end{bmatrix}$$

In either case, the parametric optimization problem may be solved for the plurality of variables $x$ as follows:

$$x = G^{-1}(H^T W (b - z) - c)$$

in which

$$G = H^T W H$$

wherein $G$ is the gain matrix. Notably, since the gain matrix $G$ depends only on $H$ and $W$, the gain matrix $G$ only needs to be factorized once (e.g., in or before an initial iteration of the solution process) and can then be reused for all subsequent iterations. This reduces the overall computational time of the solution process, as well as process 400 overall.

6. Conversion to Parametric Optimization Problem for Non-Linear Problem

Embodiments of subprocess 420 for a non-linear constrained optimization problem will now be described in detail. A constrained optimization problem that is non-linear may be defined as:

$$\min_x f(x)$$

subject to

$$g_{EQ}(x) = 0$$

$$g_{IN}(x) \leq 0$$

wherein $f(x)$ is the first objective function, $x$ is the plurality of variables, $g_{EQ}(x) = 0$ represents one or more equality constraints, if any, and $g_{IN}(x) \leq 0$ represents one or more inequality constraints, if any. It should be understood that any descriptions of variables and terms, used with respect to the linear optimization problem, apply equally to those same variables and terms used with respect to the non-linear optimization problem.

In subprocess 420, this constrained optimization problem may be converted into a parametric optimization problem. In an embodiment in which all of the constraints, including both equality and inequality constraints, are converted into PQP terms, this unconstrained parametric optimization problem may be defined as:

$$\min_x \varphi_z(x)$$

in which

$$\varphi_z(x) = f(x) + \frac{1}{2} * (g(x) + z)^T W (g(x) + z)$$

$$g(x) = \begin{bmatrix} g_{EQ}(x) \\ g_{IN}(x) \\ x \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$z = \begin{bmatrix} z_{EQ} \\ z_{IN} \\ z_0 \end{bmatrix}$$

wherein $\varphi_z(x)$ is the second objective function, $\rho_{EQ}$, $\rho_{IN}$, and $\rho_0$ are weights (e.g., which may be determined experientally), $z_{EQ}$ includes the translational parameter for each equality constraint that was converted into a PQP term, $z_{IN}$ includes the translational parameter for each inequality constraint that was converted into a PQP term, and $z_0$ includes the translational parameter for each regularization constraint.

In an alternative embodiment in which only the inequality constraints are converted into PQP terms, this partially constrained parametric optimization problem (or unconstrained parametric optimization problem when there are no equality constraints) may be defined as:

$$\min_x \varphi_z(x)$$

subject to

$$g_{EQ}(x) = 0$$

and in which

$$\varphi_z(x) = f(x) + \frac{1}{2} * (g(x) + z)^T W(g(x) + z)$$

$$g(x) = \begin{bmatrix} g_{IN}(x) \\ x \end{bmatrix}$$

$$W = \begin{bmatrix} \rho_{IN} & 0 \\ 0 & \rho_0 \end{bmatrix}, \rho_{IN} \gg \rho_0$$

$$z = \begin{bmatrix} z_{IN} \\ z_0 \end{bmatrix}$$

In either case, the parametric optimization problem, if unconstrained, may be solved using any standard method for solving non-linear unconstrained weight least square (WLS) problems. In an embodiment, this may comprise an iterative application of the solving that was described with respect to the linear unconstrained parametric optimization problem. If, on the other hand, the parametric optimization problem is partially constrained (e.g., is subject to one or more equality constraints), the parametric optimization problem may be solved by applying Netwon's method, also known as the Newton-Raphson method, on the optimality condition of the partially constrained parametric optimization problem.

7. Update of Translational Parameters

Embodiments of subprocess 440 for updating translational parameters of PQP terms will now be described in detail. The translational parameters are updated so as to guarantee that the solution to the parametric optimization problem will converge to a global optimal solution or a unique local optimal solution.

For ease of description, a parenthetical superscript will be used to define the iteration of the solution process. Thus, $x^{(k)}$ represents the values of the plurality of variables $x$ in iteration $k$ of the solution process, and $z^{(k)}$ represents the values of the translational parameters $z$ in iteration $k$ of the solution process. These translational parameters $z$ may be initialized to an initial value of zero (e.g., $z^{(0)} = 0$).

In each iteration $k$ for the parametric optimization problem, the translational parameters of the PQP terms for any equality constraints for a subsequent iteration $k + 1$ may be updated as follows:

for linear constraints,

$$z_{EQ}^{(k+1)} = z_{EQ}^{(k)} + A_{EQ}x^{(k)} - b_{EQ}$$

for non-linear constraints,

$$z_{EQ}^{(k+1)} = z_{EQ}^{(k)} + g_{EQ}(x^{(k)})$$

In each iteration $k$ for the parametric optimization problem, the translational parameters of the PQP terms for any inequality constraints for a subsequent iteration $k + 1$ may be updated as follows:

for linear constraints,

$$If\ A_{LE}x^{(k)} - b_{LE} > 0, z_{LE}^{(k+1)} = z_{LE}^{(k)} + A_{LE}x^{(k)} - b_{LE}$$

$$Else\ If\ A_{LE}x^{(k)} - b_{LE} \leq 0,$$

$$if\ A_{LE}x^{(k)} - b_{LE} \leq z_{LE}^{(k)},$$

$$z_{LE}^{(k+1)} = -(A_{LE}x^{(k)} - b_{LE})$$

$$else\ if\ A_{LE}x^{(k)} - b_{LE} > z_{LE}^{(k)},$$

$$z_{LE}^{(k+1)} = -z_{LE}^{(k)} - \min\left(A_{LE}x^{(k)} - b_{LE} + z_{LE}^{(k)}, -(A_{LE}x^{(k)} - b_{LE})\right)$$

for non-linear constraints,

$$If\ g_{LE}(x^{(k)}) > 0, z_{LE}^{(k+1)} = z_{LE}^{(k)} + g_{LE}(x^{(k)})$$

$$Else\ If\ g_{LE}(x^{(k)}) \leq 0,$$

$$if\ g_{LE}(x^{(k)}) \leq z_{LE}^{(k)},$$

$$z_{LE}^{(k+1)} = -g_{LE}(x^{(k)})$$

$$else\ if\ g_{LE}(x^{(k)}) > z_{LE}^{(k)},$$

$$z_{LE}^{(k+1)} = -z_{LE}^{(k)} - \min\left(g_{LE}(x^{(k)}) + z_{LE}^{(k)}, -g_{LE}(x^{(k)})\right)$$

In each iteration $k$, the translational parameters of the PQP terms for any regularization constraints for a subsequent iteration $k + 1$ may be updated as follows:

$$z_0^{(k+1)} = x^{(k)}$$

In each iteration $k$, the change $\Delta z^{(k)}$ in the value of the translational parameter(s) $z$, upon which the PQP term(s) of the constraint(s) depend, may be determined as follows:

$$\Delta z^{(k)} = z^{(k+1)} - z^{(k)}$$

It should be understood that subprocess 450 may utilize this change $\Delta z^{(k)}$ in value of the translational parameter(s) $z$, in subprocess 450, to determine whether or not the convergence condition is satisfied. In particular, subprocess 450 may compare the value of the change $\Delta z^{(k)}$ to a predefined threshold value, representing a tolerance. When the value of the change $\Delta z^{(k)}$ is less than or equal to (or just less than) the predefined threshold, subprocess 450 may determine that the convergence condition has been satisfied (i.e., "Yes" in subprocess 450). Conversely, when the value of the change $\Delta z^{(k)}$ is greater than (or greater than or equal to) the predefined threshold, subprocess 450 may determine that the convergence condition has not been satisfied (i.e., "No" in subprocess 450).

### 8. Slack Variables

As mentioned above, in an embodiment, the second objective function of the parametric optimization problem may include a non-negative slack variable for each inequality constraint that is converted to a PQP term. The non-negative slack variable effectively converts each inequality constraint into an equality constraint, which may reduce computational time for the solution process, and thereby process 400 as a whole.

With the introduction of slack variables $u$, the unconstrained parametric optimization problem for a linear optimization problem may be defined as:

$$\min_{x} \varphi_z(x, u)$$

in which

$$\varphi_z(x, u) = c^T x + \frac{1}{2} * (Hx - b + z + u^2)^T W (Hx - b + z + u^2)$$

$$H = \begin{bmatrix} A_{EQ} \\ A_{IN} \\ I \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$b = \begin{bmatrix} b_{EQ} \\ b_{IN} \\ 0 \end{bmatrix}$$

$$z = \begin{bmatrix} z_{EQ} \\ z_{IN} \\ z_0 \end{bmatrix}$$

$$u^2 = \begin{bmatrix} 0 \\ u_{IN}^2 \\ 0 \end{bmatrix}$$

wherein $u^2$ ensures that the slack variables $u$ are positive.

Similarly, the partially constrained parametric optimization problem for a linear optimization problem may be defined as:

$$\min_{x} \varphi_z(x, u)$$

subject to

$$A_{EQ} x = b_{EQ}$$

and in which

$$\varphi_z(x, u) = c^T x + \frac{1}{2} * (Hx - b + z + u^2)^T W (Hx - b + z + u^2)$$

$$H = \begin{bmatrix} A_{IN} \\ I \end{bmatrix}$$

$$W = \begin{bmatrix} \rho_{IN} & 0 \\ 0 & \rho_0 \end{bmatrix}, \rho_{IN} \gg \rho_0$$

$$b = \begin{bmatrix} b_{IN} \\ 0 \end{bmatrix}$$

$$z = \begin{bmatrix} z_{IN} \\ z_0 \end{bmatrix}$$

$$u^2 = \begin{bmatrix} u_{IN}^2 \\ 0 \end{bmatrix}$$

Similarly, the unconstrained parametric optimization problem for a non-linear optimization problem may be defined as:

$$\min_{x} \varphi_z(x, u)$$

in which

$$\varphi_z(x, u) = f(x) + \frac{1}{2} * (g(x) + z + u^2)^T W (g(x) + z + u^2)$$

$$g(x) = \begin{bmatrix} g_{EQ}(x) \\ g_{IN}(x) \\ x \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$z = \begin{bmatrix} z_{EQ} \\ z_{IN} \\ z_0 \end{bmatrix}$$

$$u^2 = \begin{bmatrix} 0 \\ u_{IN}^2 \\ 0 \end{bmatrix}$$

Similarly, the partially constrained parametric optimization problem for a non-linear optimization problem may be defined as:

$$\min_{x} \varphi_z(x, u)$$

subject to

$$g_{EQ}(x) = 0$$

and in which

$$\varphi_z(x, u) = f(x) + \frac{1}{2} * (g(x) + z + u^2)^T W (g(x) + z + u^2)$$

$$g(x) = \begin{bmatrix} g_{IN}(x) \\ x \end{bmatrix}$$

$$W = \begin{bmatrix} \rho_{IN} & 0 \\ 0 & \rho_0 \end{bmatrix}, \rho_{IN} \gg \rho_0$$

$$z = \begin{bmatrix} z_{IN} \\ z_0 \end{bmatrix}$$

$$u^2 = \begin{bmatrix} u_{IN}^2 \\ 0 \end{bmatrix}$$

## 9. Example Application

Disclosed embodiments provide an elegant algorithm for solving constrained optimization problems that is easy to implement and requires only a linear equation solver to solve an entirely primal problem. This provides the potential to democratize optimization capabilities, since, unlike with traditional algorithms, commercial third-party solvers are not required. In addition, utilization of the algorithmic framework may provide insights to the optimality condition, provide insights into the relationships between the sensitivity, multipliers, dual values, shadow prices, and/or the like of constraints in which linear independence constraint qualification (LICQ) does not hold, provide a unified framework for multiplier analysis and to reduce costs, and/or provide a new direction for algorithm development. Furthermore, the parametric optimization problem has several other desirable properties, such as symmetry and position invariance. Notably, the conversion of constraints into PQP terms also produces a parametric optimization problem that is more amenable to parallel computing.

The disclosed embodiments may be applied to any constrained optimization problem, regardless of context or application. As one example, the disclosed embodiments of subprocess 420 may be used to convert a constrained optimization problem into a machine-learning algorithm that can be trained (e.g., using supervised learning) and deployed, apart from the other subprocesses of process 400 described herein. This is advantageous since machine-learning algorithms are generally not otherwise capable of incorporating constraints. As another example, subprocess 420 may be used to convert physics-inspired constrained optimization problems and/or constrained optimization problems to be performed within non-traditional computing architectures (e.g., to implement simulated annealing). In any case, in an embodiment, subprocess 420 (with or without subprocess 410) may be performed in isolation (i.e., without subprocesses 430-470, with only a subset of subprocesses 430-470, with alternative subprocesses in an alternative overarching process, etc.).

In a primary embodiment, target system 140 is a power system, and process 400 is used to perform optimal power flow analysis, economic dispatch, state estimation, distributed energy resource (DER) management, contingency analysis, Volt-Var optimization, and/or in any other downstream function for the power system. In particular, the final solution, output by the solution process within process 400, may represent the result of the optimization or other analysis. Then, an optimized configuration for the power system may be determined from this final solution in subprocess 460, and the power system may be operated according to the optimized configuration in subprocess 470, as discussed elsewhere herein.

As an example in which the final solution represents optimal power flow, the optimized configuration may specify power generation within the power system. For instance, the final solution and resulting optimized configuration may indicate the optimal setpoints for power generators within the power system, to meet the demand on the power system, while minimizing operating costs and/or satisfying one or more other criteria. Optimal power flow may be executed in real time (e.g., as system telemetry is received from monitoring module 310 of the power system), periodically, and/or in response to a triggering event (e.g., operator input via human-to-machine interface 340, satisfaction of one or more monitored criteria, etc.). Optimization and control module 340 may, automatically or semi-automatically, initiate a control operation via communication with control module 320 of the power system to conform the power system to the setpoints determined by the optimal power flow and indicated in the optimized configuration.

DER management can be thought of as a species of optimal power flow for distributed energy resources within the power system. For example, the final solution and resulting optimized configuration may indicate the setpoints for active and reactive power, power factor, and/or voltage at the points of interconnection with distributed energy resources or other nodes within the network of the power system. DER management may be executed in real time (e.g., as system telemetry is received from monitoring module 310 of the power system), periodically, and/or in response to a triggering event (e.g., operator input via human-to-machine interface 340, satisfaction of one or more monitored criteria, etc.). Optimization and control module 340 may, automatically or semi-automatically, initiate a control operation via communication with control module 320 of the power system to conform the power system to the setpoints determined by the DER management and indicated in the optimized configuration.

As an example in which the final solution represents economic dispatch, the optimized configuration may specify power generation within the power system. Economic dispatch refers to the operation of generation resources in the power system to produce energy at the lowest cost to reliably serve consumers, recognizing any operational limits of generation and transmission resources. For example, the final solution and resulting optimized configuration may indicate the optimal units of power to be produced by each power generator within the power system, to meet the demand on the power system, while minimizing the cost of power generation. Economic dispatch may be executed in real time (e.g., as system telemetry is received from monitoring module 310 of the power system), periodically, and/or in response to a triggering event (e.g.,

operator input via human-to-machine interface 340, satisfaction of one or more monitored criteria, etc.). Optimization and control module 340 may, automatically or semi-automatically, initiate a control operation via communication with control module 320 of the power system to conform the power system to the optimized configuration.

As an example in which the final solution represents an estimated state, the optimized configuration may represent a preventative or corrective control operation, for instance, to bring the power system or other target system 140 to an improved state (e.g., more efficient, more stable, more reliable, with no or fewer violations of one or more criteria, etc.). The estimated state may comprise estimated parameters of the power system, such as voltage magnitudes and phase angles for each node in the network of the power system. The optimized configuration may reconfigure the settings (e.g., status, setpoint, position, etc.) of one or more resource 142 of target system 140 to achieve the improved state. This optimization may be performed in real time (e.g., as system telemetry is received from monitoring module 310 of target system 140), periodically, and/or in response to a triggering event (e.g., operator input via human-to-machine interface 340, satisfaction of one or more monitored criteria, etc.). Optimization and control module 340 may, automatically or semi-automatically, initiate a control operation via communication with control module 320 of target system 140 to conform target system 140 to the optimized configuration.

As another example, the estimated state of target system 140 may be used as a baseline model of target system 140 to perform "what-if" analysis for various hypothetical scenarios (e.g., the failure of a resource 142). For example, the estimated state (e.g., voltage magnitude and phase angle) at each node in the network of a power system may be used to calculate the power generation or consumption at that node for use in the contingency analysis. Contingency analysis may be performed in real time (e.g., as system telemetry is received from monitoring module 310 of target system 140), periodically, and/or in response to a triggering event (e.g., operator input via human-to-machine interface 340, satisfaction of one or more monitored criteria, etc.). If a problem is detected by the contingency analysis, an operator may perform a preventative or corrective control operation (e.g., via an input of a graphical user interface of human-to-machine interface 350, manually, etc.). Alternatively or additionally, optimization and control module 340 may, automatically or semi-automatically, perform contingency analysis for one or more hypothetical scenarios, and when a problem is detected, initiate a preventative or corrective control operation, according to an optimized configuration, via communication with control module 320 of target system 140.

As another example, the estimated state of a power system may be used as an input to Volt-Var optimization. Volt-Var optimization may utilize the estimated state (e.g., voltage magnitudes and phase angles) as a baseline to determine optimal voltage levels and reactive power to achieve efficient operation of the power system (e.g., by reducing system losses, peak demand, and/or energy consumption). The Volt-Var optimization may be performed in real time (e.g., as system telemetry is received from monitoring module 310 of the power system), periodically, and/or in response to a triggering event (e.g., operator input via human-to-machine interface 340, satisfaction of one or more monitored criteria, etc.). Optimization and control module 340 may, automatically or semi-automatically, initiate a control operation via communication with control module 320 of the power system to conform the power system to the optimal voltage levels and reactive power, as determined by the Volt-Var optimization. The control operation may comprise controlling switchable capacitors, on-load tap-changers, and/or the like.

## 10. Example Embodiments

Disclosed embodiments provide system control utilizing an algorithmic framework to solve linear and nonlinear optimization problems. A first objective, achievable by one or more disclosed embodiments, is reduced computational complexity and computational expense during optimization. A second objective, achievable by one or more disclosed embodiments, is guaranteed convergence. A third objective, achievable by one or more disclosed embodiments, is increased interpretability of the results of optimization. A fourth objective, achievable by one or more disclosed embodiments, is to provide insights into the relationships between constraints and other elements of the optimization problem.

To better address one or more of these concerns, example embodiments include, without limitation:

Embodiment 1: A method of optimizing operation of a power system, the method comprising using at least one hardware processor to: acquire a constrained optimization problem for a power system, the constrained optimization problem comprising a first objective function that is subject to one or more constraints, wherein the first objective function includes a plurality of variables that collectively represent a configuration of the power system; convert the constrained optimization problem into a parametric optimization problem comprising a second objective function that includes the first objective function and, for each of at least a subset of the one or more constraints, a parametric quadratic penalty (PQP) term that depends on a translational parameter; perform a solution process that comprises, until a convergence condition is satisfied, in each of one or more iterations, solving the parametric optimization problem to produce a solution, and updating a value of the translational parameter on which the PQP term of at least one of the at least a subset of the one or more constraints depends; determining an optimized configuration of the power system from a final solution output by the solution process; and operating the power system according to the optimized configuration. This embodiment may achieve at least the first, third, and fourth objectives.

Embodiment 2: The method of Embodiment 1, further comprising using the at least one hardware processor to: determine whether or not the constrained optimization problem has two or more optimal solutions; and when determining that the constrained optimization problem has two or more optimal solutions, add at least one regularization constraint to the at least a subset of the one or more constraints. This embodiment may achieve at least the second objective.

Embodiment 3: The method of any preceding Embodiment, wherein the at least a subset of the one or more constraints comprises all of the one or more constraints, such that the parametric optimization problem is unconstrained. This embodiment may achieve at least the first, third, and fourth objectives.

Embodiment 4: The method of either Embodiment 1 or 2, wherein the one or more constraints are a plurality of constraints that comprises one or more equality constraints and one or more inequality constraints, wherein the at least a subset of the one or more constraints consists of the one or more inequality constraints, and wherein the second objective function is subject to the one or more equality constraints. This embodiment may achieve at least the first, third, and fourth objectives.

Embodiment 5: The method of any preceding Embodiment, wherein the value of the translational parameter, upon which the PQP term of the at least one constraint depends, is updated based on a type of the at least one constraint, wherein the type of the at least one constraint is one of a plurality of possible constraint types, wherein the plurality of possible constraint types includes equality, inequality, and regularization. This embodiment may achieve at least the second objective.

Embodiment 6: The method of any preceding Embodiment, wherein the value of the translational parameter, upon which the PQP term of the at least one constraint depends, is updated based on a current value of the translational parameter and a distance of the produced solution to a constraint hypersurface. This embodiment may achieve at least the second objective.

Embodiment 7: The method of any preceding Embodiment, wherein the constrained optimization problem is linear. This embodiment may achieve at least the first, third, and fourth objectives.

Embodiment 8: The method of Embodiment 7, wherein, for the constrained optimization problem defined as:

$$\min_{x} c^T x$$

subject to

$$A_{EQ} x = b_{EQ}$$

$$A_{IN} x \leq b_{IN}$$

wherein $c^T x$ is the first objective function, $x$ is the plurality of variables, $c$ includes a coefficient for each of the plurality of variables $x$, $A_{EQ}$ is a set of equality coefficients, $b_{EQ}$ is a set of equality values, $A_{IN}$ is a set of inequality coefficients, and $b_{IN}$ is a set of inequality values,

the parametric optimization problem is unconstrained and defined as:

$$\min_{x} \varphi_z(x)$$

in which

$$\varphi_z(x) = c^T x + \frac{1}{2} * (Hx - b + z)^T W (Hx - b + z)$$

$$H = \begin{bmatrix} A_{EQ} \\ A_{IN} \\ I \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$b = \begin{bmatrix} b_{EQ} \\ b_{IN} \\ 0 \end{bmatrix}$$

$$z = \begin{bmatrix} z_{EQ} \\ z_{IN} \\ z_0 \end{bmatrix}$$

wherein $\varphi_z(x)$ is the second objective function, $I$ is an identity matrix, $\rho_{EQ}$, $\rho_{IN}$, and $\rho_0$ are weights, $z_{EQ}$ includes the translational parameter for each equality constraint in the at least a subset of the one or more constraints, $z_{IN}$ includes the translational parameter for each inequality constraint in the at least a subset of the one or more constraints, and $z_0$ includes the translational parameter for each regularization constraint in the at least a subset of the one or more constraints. This embodiment may achieve at least the first, second, third, and fourth objectives.

Embodiment 9: The method of any one of Embodiments 1 through 6, wherein the constrained optimization problem is non-linear. This embodiment may achieve at least the first, third, and fourth objectives.

Embodiment 10: The method of Embodiment 9, wherein, for the constrained optimization problem defined as:

$$\min_x f(x)$$

subject to

$$g_{EQ}(x) = 0$$

$$g_{IN}(x) \le 0$$

wherein $f(x)$ is the first objective function, $x$ is the plurality of variables, $g_{EQ}(x) = 0$ represents one or more equality constraints, and $g_{IN}(x) \le 0$ represents one or more inequality constraints, the parametric optimization problem is unconstrained and defined as:

$$\min_x \varphi_z(x)$$

$$\varphi_z(x) = f(x) + \frac{1}{2} * (g(x) + z)^T W(g(x) + z)$$

in which

$$g(x) = \begin{bmatrix} g_{EQ}(x) \\ g_{IN}(x) \\ x \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$z = \begin{bmatrix} z_{EQ} \\ z_{IN} \\ z_0 \end{bmatrix}$$

wherein $\varphi_z(x)$ is the second objective function, $\rho_{EQ}$, $\rho_{IN}$, and $\rho_0$ are weights, $z_{EQ}$ includes the translational parameter for each equality constraint in the at least a subset of the one or more constraints, $z_{IN}$ includes the translational parameter for each inequality constraint in the at least a subset of the one or more constraints, and $z_0$ includes the translational parameter for each regularization constraint in the at least a subset of the one or more constraints. This embodiment may achieve at least the first, second, third, and fourth objectives.

Embodiment 11: The method of Embodiment 9, wherein, for the constrained optimization problem defined as:

$$\min_x f(x)$$

subject to

$$g_{EQ}(x) = 0$$

$$g_{IN}(x) \leq 0$$

wherein $f(x)$ is the first objective function, $x$ is the plurality of variables, $g_{EQ}(x) = 0$ represents one or more equality constraints, and $g_{IN}(x) \leq 0$ represents one or more inequality constraints,
the parametric optimization problem is defined as:

$$\min_x \varphi_z(x)$$

subject to

$$g_{EQ}(x) = 0$$

and in which

$$\varphi_z(x) = f(x) + \frac{1}{2} * (g(x) + z)^T W(g(x) + z)$$

$$g(x) = \begin{bmatrix} g_{IN}(x) \\ x \end{bmatrix}$$

$$W = \begin{bmatrix} \rho_{IN} & 0 \\ 0 & \rho_0 \end{bmatrix}, \rho_{IN} \gg \rho_0$$

$$z = \begin{bmatrix} z_{IN} \\ z_0 \end{bmatrix}$$

wherein $\varphi_z(x)$ is the second objective function, $\rho_{IN}$ and $\rho_0$ are weights, $z_{IN}$ includes the translational parameter for each inequality constraint in the at least a subset of the one or more constraints, and $z_0$ includes the translational parameter for each regularization constraint in the at least a subset of the one or more constraints. This embodiment may achieve at least the first, second, third, and fourth objectives.

Embodiment 12: The method of any preceding Embodiment, further comprising using the at least one hardware processor to, in at least one of the one or more iterations, determine whether or not the convergence condition is satisfied based on a change in the value of the translational parameter, upon which the PQP term of the at least one constraint depends. This embodiment may achieve at least the second objective.

Embodiment 13: The method of Embodiment 12, wherein determining whether or not the convergence condition is satisfied comprises determining whether or not the change in the value is less than a predefined threshold value. This embodiment may achieve at least the second objective.

Embodiment 14: The method of any preceding Embodiment, wherein the at least a subset of the one or more constraints consists of only those of the one or more constraints that are violated by an initial solution to the constrained optimization problem in which the first objective function was not subjected to the one or more constraints. This embodiment may achieve at least the first objective.

Embodiment 15: The method of any preceding Embodiment, further comprising using the at least one hardware processor to: determine whether or not the constrained optimization problem is strictly convex; and when determining that the constrained optimization problem is strictly convex, select the at least a subset of the one or more constraints, such that the at least a subset of the one or more constraints consists of only those of the one or more constraints that are violated by an initial solution to the constrained optimization problem in which the first objective function was not subjected to the one or more constraints. This embodiment may achieve at least the first objective.

Embodiment 16: The method of any preceding Embodiment, wherein the second objective function includes a slack variable for each inequality constraint in the at least a subset of the one or more constraints. This embodiment may achieve at least the first objective.

Embodiment 17: The method of any preceding Embodiment, wherein the final solution represents one or more control settings for optimal power flow in the power system, and wherein the optimized configuration defines an amount of power to be output by each of one or more power generation resources within the power system. This embodiment may achieve at least the third and fourth objectives.

Embodiment 18: The method of any one of Embodiments 1 through 16, wherein the final solution represents economic dispatch in the power system, and wherein the optimized configuration defines an amount of power to be output by each of one or more power generation resources within the power system. This embodiment may achieve at least the third and fourth objectives.

Embodiment 19: A system comprising: at least one hardware processor; and software configured to, when executed by the at least one hardware processor, perform the method of any one of Embodiments 1 through 18.

Embodiment 20: A non-transitory computer-readable medium having instructions stored thereon, wherein the instructions, when executed by a processor, cause the processor to: perform the method of any one of Embodiments 1 through 18.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

**Claims**

1. A method of optimizing operation of a power system, the method comprising using at least one hardware processor to:

   acquire (410) a constrained optimization problem for a power system, the constrained optimization problem comprising a first objective function that is subject to one or more constraints, wherein the first objective function includes a plurality of variables that collectively represent a configuration of the power system;
   convert (420) the constrained optimization problem into a parametric optimization problem comprising a second objective function that includes the first objective function and, for each of at least a subset of the one or more constraints, a parametric quadratic penalty (PQP) term that depends on a translational parameter;
   perform (430) a solution process that comprises, until a convergence condition is satisfied (450), in each of one or more iterations, solving the parametric optimization problem to produce a solution, and updating (440) a value of the translational parameter on which the PQP term of at least one of the at least a subset of the one or more constraints depends;
   determining (460) an optimized configuration of the power system from a final solution output by the solution process; and
   operating (470) the power system according to the optimized configuration.

2. The method of Claim 1, further comprising using the at least one hardware processor to:

   determine whether or not the constrained optimization problem has two or more optimal solutions; and
   when determining that the constrained optimization problem has two or more optimal solutions, add at least one regularization constraint to the at least a subset of the one or more constraints.

3. The method of any preceding claim, wherein the at least a subset of the one or more constraints comprises all of the one or more constraints, such that the parametric optimization problem is unconstrained.

4. The method of either Claim 1 or 2, wherein the one or more constraints are a plurality of constraints that comprises one or more equality constraints and one or more inequality constraints, wherein the at least a subset of the one or more constraints consists of the one or more inequality constraints, and wherein the second objective function is subject to the one or more equality constraints.

5. The method of any preceding claim, wherein the value of the translational parameter, upon which the PQP term of the at least one constraint depends, is updated based on a type of the at least one constraint, wherein the type of the at least one constraint is one of a plurality of possible constraint types, wherein the plurality of possible constraint types includes equality, inequality, and regularization, and/or
   wherein the value of the translational parameter, upon which the PQP term of the at least one constraint depends, is updated based on a current value of the translational parameter and a distance of the produced solution to a constraint hypersurface.

6. The method of any preceding claim, wherein the constrained optimization problem is linear, and

   preferably wherein, for the constrained optimization problem defined as:

   $$\min_x c^T x$$

   subject to

   $$A_{EQ} x = b_{EQ}$$

   $$A_{IN} x \leq b_{IN}$$

   wherein $c^T x$ is the first objective function, $x$ is the plurality of variables, $c$ includes a coefficient for each of the plurality of variables $x$, $A_{EQ}$ is a set of equality coefficients, $b_{EQ}$ is a set of equality values, $A_{IN}$ is a set of inequality coefficients, and $b_{IN}$ is a set of inequality values,
   the parametric optimization problem is unconstrained and defined as:

$$\min_{x} \varphi_z(x)$$

in which

$$\varphi_z(x) = c^T x + \frac{1}{2} * (Hx - b + z)^T W (Hx - b + z)$$

$$H = \begin{bmatrix} A_{EQ} \\ A_{IN} \\ I \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$b = \begin{bmatrix} b_{EQ} \\ b_{IN} \\ 0 \end{bmatrix}$$

$$z = \begin{bmatrix} z_{EQ} \\ z_{IN} \\ z_0 \end{bmatrix}$$

wherein $\varphi_z(x)$ is the second objective function, $I$ is an identity matrix, $\rho_{EQ}$, $\rho_{IN}$, and $\rho_0$ are weights, $z_{EQ}$ includes the translational parameter for each equality constraint in the at least a subset of the one or more constraints, $z_{IN}$ includes the translational parameter for each inequality constraint in the at least a subset of the one or more constraints, and $z_0$ includes the translational parameter for each regularization constraint in the at least a subset of the one or more constraints.

7. The method of any one of Claims 1 through 5, wherein the constrained optimization problem is non-linear, and preferably:

wherein, for the constrained optimization problem defined as:

$$\min_{x} f(x)$$

subject to

$$g_{EQ}(x) = 0$$

$$g_{IN}(x) \le 0$$

wherein $f(x)$ is the first objective function, $x$ is the plurality of variables, $g_{EQ}(x) = 0$ represents one or more equality constraints, and $g_{IN}(x) \le 0$ represents one or more inequality constraints, the parametric optimization problem is unconstrained and defined as:

$$\min_{x} \varphi_z(x)$$

$$\varphi_z(x) = f(x) + \frac{1}{2} * (g(x) + z)^T W(g(x) + z)$$

in which

$$g(x) = \begin{bmatrix} g_{EQ}(x) \\ g_{IN}(x) \\ x \end{bmatrix}$$

$$W = \begin{bmatrix} \rho_{EQ} & 0 & 0 \\ 0 & \rho_{IN} & 0 \\ 0 & 0 & \rho_0 \end{bmatrix}, \rho_{EQ} > \rho_{IN} \gg \rho_0$$

$$z = \begin{bmatrix} z_{EQ} \\ z_{IN} \\ z_0 \end{bmatrix}$$

wherein $\varphi_z(x)$ is the second objective function, $\rho_{EQ}$, $\rho_{IN}$, and $\rho_0$ are weights, $z_{EQ}$ includes the translational parameter for each equality constraint in the at least a subset of the one or more constraints, $z_{IN}$ includes the translational parameter for each inequality constraint in the at least a subset of the one or more constraints, and $z_0$ includes the translational parameter for each regularization constraint in the at least a subset of the one or more constraints, or
wherein, for the constrained optimization problem defined as:

$$\min_x f(x)$$

subject to

$$g_{EQ}(x) = 0$$

$$g_{IN}(x) \leq 0$$

wherein $f(x)$ is the first objective function, $x$ is the plurality of variables, $g_{EQ}(x) = 0$ represents one or more equality constraints, and $g_{IN}(x) \leq 0$ represents one or more inequality constraints,
the parametric optimization problem is defined as:

$$\min_x \varphi_z(x)$$

subject to

$$g_{EQ}(x) = 0$$

and in which

$$\varphi_z(x) = f(x) + \frac{1}{2} * (g(x) + z)^T W(g(x) + z)$$

$$g(x) = \begin{bmatrix} g_{IN}(x) \\ x \end{bmatrix}$$

$$W = \begin{bmatrix} \rho_{IN} & 0 \\ 0 & \rho_0 \end{bmatrix}, \rho_{IN} \gg \rho_0$$

$$z = \begin{bmatrix} z_{IN} \\ z_0 \end{bmatrix}$$

wherein $\varphi_z(x)$ is the second objective function, $\rho_{IN}$ and $\rho_0$ are weights, $z_{IN}$ includes the translational parameter for each inequality constraint in the at least a subset of the one or more constraints, and $z_0$ includes the translational parameter for each regularization constraint in the at least a subset of the one or more constraints.

8. The method of any preceding claim, further comprising using the at least one hardware processor to, in at least one of the one or more iterations, determine whether or not the convergence condition is satisfied based on a change in the value of the translational parameter, upon which the PQP term of the at least one constraint depends, preferably wherein determining whether or not the convergence condition is satisfied comprises determining whether or not the change in the value is less than a predefined threshold value.

9. The method of any preceding claim, wherein the at least a subset of the one or more constraints consists of only those of the one or more constraints that are violated by an initial solution to the constrained optimization problem in which the first objective function was not subjected to the one or more constraints.

10. The method of any preceding claim, further comprising using the at least one hardware processor to:

    determine whether or not the constrained optimization problem is strictly convex; and
    when determining that the constrained optimization problem is strictly convex, select the at least a subset of the one or more constraints, such that the at least a subset of the one or more constraints consists of only those of the one or more constraints that are violated by an initial solution to the constrained optimization problem in which the first objective function was not subjected to the one or more constraints.

11. The method of any preceding claim, wherein the second objective function includes a slack variable for each inequality constraint in the at least a subset of the one or more constraints.

12. The method of any preceding claim, wherein the final solution represents one or more control settings for optimal power flow in the power system, and wherein the optimized configuration defines an amount of power to be output by each of one or more power generation resources within the power system.

13. The method of any one of Claims 1 through 11, wherein the final solution represents economic dispatch in the power system, and wherein the optimized configuration defines an amount of power to be output by each of one or more power generation resources within the power system.

14. A system comprising:

    at least one hardware processor; and
    software configured to, when executed by the at least one hardware processor, perform the method of any one of Claims 1 through 13.

15. A non-transitory computer-readable medium having instructions stored thereon, wherein the instructions, when executed by a processor, cause the processor to perform the method of any one of Claims 1 through 13.

Management System
110

Software
112

Database
114

Target System
140

Resources
142

Network(s)
120

User System
130

**FIG. 1**

**200**

**FIG. 2**

140

110

112

114

Monitoring
310

Optimization &
Control
330

System Model
350

Control
320

HMI
340

User System
130

**FIG. 3**

**400**

FIG. 4

Europäisches Patentamt

European Patent Office

Office européen des brevets

# EUROPEAN SEARCH REPORT

**Application Number**

EP 24 16 7667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI YU ET AL: "Fast Model Predictive Control Based on Adaptive Alternating Direction Method of Multipliers", JOURNAL OF CHEMISTRY, [Online] vol. 2019, 30 September 2019 (2019-09-30), pages 1-12, XP093205186, US ISSN: 2090-9063, DOI: 10.1155/2019/8035204 Retrieved from the Internet: URL:http://downloads.hindawi.com/journals/jchem/2019/8035204.xml> [retrieved on 2024-09-17] * sections 1 to 3 * | 1-15 | INV. G06F17/11 H02J3/00 |
| A | Lucija Mihalj: "Penalty methods in constrained optimization", , 31 December 2019 (2019-12-31), XP093205156, Retrieved from the Internet: URL:https://repozitorij.pmf.unizg.hr/islandora/object/pmf:8399/datastream/PDF/view [retrieved on 2024-09-17] * Chapter 5 * | 1-15 | |
| A | LINBIN HUANG ET AL: "Decentralized Data-Enabled Predictive Control for Power System Oscillation Damping", ARXIV.ORG, CORNELL UNIVERSITY LIBRARY, 201 OLIN LIBRARY CORNELL UNIVERSITY ITHACA, NY 14853, [Online] 17 June 2021 (2021-06-17), XP081974188, [retrieved on 2024-09-17] * sections II to IV * | 1-15 | TECHNICAL FIELDS SEARCHED (IPC) G06F H02J |

-/--

The present search report has been drawn up for all claims

| Place of search | Date of completion of the search | Examiner |
|---|---|---|
| Berlin | 17 September 2024 | Virnik, Elena |

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Birgin E. G. ET AL: "Model Augmented Lagrangian Algorithm" In: "Practical Augmented Lagrangian Methods for Constrained Optimization", 31 December 2014 (2014-12-31), XP093205152, * Chapter 4 * ----- | 1-15 | |

TECHNICAL FIELDS
SEARCHED        (IPC)

The present search report has been drawn up for all claims

| Place of search | Date of completion of the search | Examiner |
|---|---|---|
| Berlin | 17 September 2024 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)